# EUROPEAN PATENT SPECIFICATION

(11) **EP 1 433 697 B1**
(45) Date of publication and mention of the grant of the patent: **13.06.2012**
(21) Application number: 04007670.5
(22) Date of filing: 02.01.1997
(51) Int. Cl.: B62M 23/02

(54) **Battery for motor-assisted bicycle**
Batterie für Fahrrad mit Hilfsmotor
Batterie pour bicyclette à moteur auxiliaire

(30) Priority: 08.03.1996 JP 5211496
(43) Date of publication of application: 30.06.2004
(62) Divisional of application: 97100024.5
(73) Proprietor: HONDA GIKEN KOGYO KABUSHIKI KAISHA, Minato-ku, Tokyo (JP)
(72) Inventor: Kawaguchi, Kenji, 1-4, Chuo 1-chome, Wako-shi, Saitama (JP); Suzuki, Hiroyuki, 1-4, Chuo 1-chome, Wako-shi, Saitama (JP); Iseno, Mitsuru, 1-4, Chuo 1-chome, Wako-shi, Saitama (JP); Shimmura, Hiroyuki, 1-4, Chuo 1-chome, Wako-shi, Saitama (JP)
(74) Representative: Liska, Horst

(56) References cited:
- EP-A- 0 636 536
- EP-A- 0 686 521
- EP-A1- 0 225 364
- EP-A1- 0 697 331
- WO-A1-94/01914
- GB-A- 2 050 270
- JP-A- 59 005 975
- US-A- 4 949 046
- US-A- 5 539 318

## Description

### Field of the Invention

The present invention relates to a battery for a motor- assisted bicycle with a battery meter built in the battery, and more particularly to a battery for a motor-assisted bicycle which allows an operator to check a remaining capacity of the battery even during operation of the bicycle.

### Prior Art

Japanese Utility Model Laid-open No. 58-81865 discloses an on-vehicle battery provided with a capacity indicating function. This function is such that when a push button is depressed by a user, a battery capacity is indicated by comparing a terminal voltage of the on-vehicle battery with a reference voltage.

Japanese Patent Laid-open No. 50-125438 and Japanese Patent Publication No. 54-43776 disclose that a battery for motive power is mounted on a vehicle frame of a bicycle of a motor-assisted bicycle.

Japanese Patent Application No. 7-300766 describes in detail a battery for a motor-assisted bicycle adapted to be removably mounted on the upper side of a main pipe of the bicycle.

Japanese Patent Laid-open No. 59-5975 discloses that electric energy charged and discharged is integrated to indicate a remaining capacity of a battery. A bicycle according to the preamble of claim 1 is shown in the document EP 0 697 331 A1.

In the case that a battery meter is provided on a battery for a motor-assisted bicycle, it is preferable in view of ease of use that the battery can be charged outdoors in its on- vehicle condition and that the battery can be charged also indoors in the condition that it has been removed from the bicycle.

Further, in computing a remaining capacity of the battery, it is preferable in view of accuracy to integrate an amperage flowing into and out of the battery.

Problem to be Solved by the Invention

There is a possibility that a remaining capacity of the battery cannot be checked during operation of the bicycle, depending on a mount position of the battery meter. When the battery meter is mounted behind a saddle of the bicycle, for example, it is inconvenient that the operator must ride off the bicycle every time he/she intends to check a remaining capacity of the battery.

Further, there is a possibility that when the battery meter is merely mounted in the battery, the battery meter may be covered with a protective cover or an upper cover of the battery, so that the battery meter cannot be seen from the outside.

In this case, it is inconvenient to remove the upper cover or the like every time the operator intends to check a remaining capacity of the battery.

In the case that the battery meter is mounted on the battery at a directly visible position, it is necessary to protect the inside of the battery inclusive of the battery meter in consideration of the fact that the bicycle is exposed to the weather or the like. For example, the battery must be made waterproof and dustproof.

As an example of the battery meter for indicating a remaining capacity of the battery, a moving coil instrument is known. The moving coil instrument makes an indication by rotation of a needle. However, a space for allowing the rotation of the needle is necessary in the moving coil instrument, and a further reduction in size of the instrument is desired.

The present invention has been achieved to solve the above problems in the prior art, and it is a first object of the present invention to provide a battery for a motor-assisted bicycle adapted to be removably mounted on the upper side of a main pipe of the bicycle which allows an operator to check a remaining capacity of the battery even during operation of the bicycle.

It is a second object of the present invention to locate a battery meter at a position less influenced by rainwater and dust.

It is a third object of the present invention to locate a battery meter at a position less influenced by rainwater and dust and suppress rattling in the battery.

It is a fourth object of the present invention to provide a battery for a motor-assisted bicycle which can be easily assembled in a condition that a battery meter is built in the battery.

It is a fifth object of the present invention to indicate a remaining capacity of the battery in a small space.

It is a sixth object of the present invention to prevent rainwater and dust from entering the battery from an indication window of the battery meter.

### Means of Solving the Problem

The features according to claim 1 and its dependent claims 2-12 solve this problem.

### Effect of the Invention

In the battery for the motor-assisted bicycle according to claim 1, the battery meter for externally indicating a remaining capacity of the battery can be located in the vicinity of the handle post when the battery is mounted on the upper side of the main pipe. Accordingly, the operator can visually check the remaining capacity of the battery without the need for so moving the operator's neck or line of sight during operating the bicycle, thus determining a remaining travel distance and time by assisted power.

When the battery is mounted on the upper side of the main pipe, the battery meter is located in the vicinity of the handle post. Further, the battery meter externally indicates a remaining capacity of the battery.

Accordingly, an operator can visually check the remaining capacity without the need for so moving the operator's neck or line of sight during operation of the bicycle.

By locating a charging connector on one side surface or the like of the battery, the battery can be charged outdoors in the condition where it remains mounted on the bicycle. Further, the battery can be charged with its remaining capacity checked also indoors in the condition where the battery has been removed from the bicycle.

Since the battery meter is mounted inside of the upper cover, the battery meter, especially, its control circuit and an IC or the like constituting the control circuit, can be prevented from being exposed directly to the weather or the like.

In the case that the remaining capacity of the battery is detected from the temperature of the battery body, a temperature sensor in the battery meter can accurately detect the temperature of the battery body, because the battery meter is located inside of the battery. This improves the reliability of the battery meter.

In the case that the remaining capacity of the battery is detected from the temperature of the battery body, a temperature sensor in the battery meter can' accurately detect the temperature of the battery body, because the battery meter is located inside the battery. This improves the reliability of the battery meter.

The battery meter may be modified to detect a moment of full charge in order to improve the accuracy of indication of a remaining capacity of the battery as described in Japanese Patent Application No. 8-8564. Conventional battery meters are described in Japanese Patent Laid-open No. 59-5957 and Japanese Patent Application No. 8-8564. Further, a conventional battery for a motor- assisted bicycle removably mounted on the upper side of a main pipe of the bicycle is described in Japanese Patent Application No. 7-300766. These conventional battery meters and battery may be referred to.

According to claim 1, said battery meter has an indicating portion configured by or comprising a bar graph meter employing a plurality of light emitting diodes arranged in an array, and said upper cover is provided with a window corresponding to the array of said light emitting diodes.

Since the remaining capacity of the battery is indicated by the bar graph meter, an indication space can be reduced in size, and the operator can quickly visually grasp an approximate value of the remaining capacity of the battery.

Further, since the upper cover is formed with the window corresponding to the array of the light emitting diodes, the light from the light emitting diodes can be radiated to the outside of the battery, thus allowing external indication.

In particular, when operating the bicycle at high speeds, the effect that the operator can quickly grasp the remaining capacity becomes remarkable.

Further, since the bar graph meter is constructed of the light emitting diodes, the operator can conveniently determine the remaining capacity and the charge amount of the battery even at night or at a dark place.

Thus, according to the present invention, it is possible to provide a battery for a motor-assisted bicycle which allows the operator to conveniently check a remaining capacity of the battery even during operation of the bicycle.

### Preferred Embodiment

Some preferred embodiments of the present invention will now be described with reference to the drawings.

### BRIEF DESCRIPTION OF THE DRAWINGS

FIG. 1 is a side view of a motor-assisted bicycle on which the battery according to the present invention is mounted.
FIG. 2 is a partially cutaway, side view of the battery according to the present invention.
FIG. 3 is a partially cutaway, enlarged side view of an essential part of the battery shown in FIG. 2 in the vicinity of a handle of the battery.
FIG. 4 is a top plan view of a battery according to a preferred embodiment of the present invention.
FIG. 5 is a partially cutaway, side view of an upper cover of the battery shown in FIG. 4.
FIGS. 6(a) and 6(b) are top plan views of different types of labels each adapted to be attached to the upper cover of the battery according to the present invention.
FIG. 7 is a top plan view of a battery according to another preferred embodiment of the present invention.
FIG. 8 is a partially cutaway, top plan view of the battery shown in FIG. 7.
FIG. 9 is a partially cutaway, side view of the battery shown in FIG. 7.
FIG. 10 is a top plan view of a spacer having walls, seatings, and harness guides in the battery shown in FIGS. 8 and 9.
FIG. 11 is a cross section taken along the line I-I in FIG. 10.
FIG. 12 is a front elevation of the spacer shown in FIG. 10.
FIG. 13 is a schematic block diagram of the battery according to the present invention.

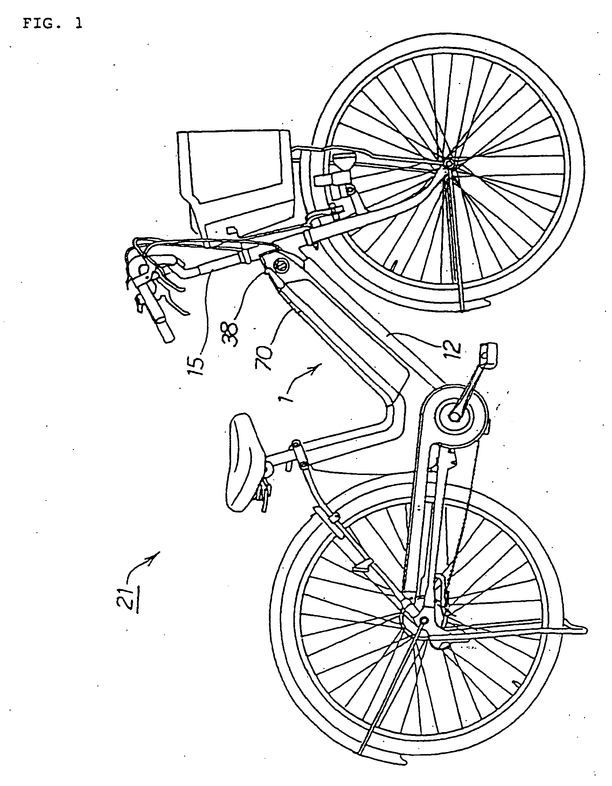

FIG. 1 is a side view of a motor-assisted bicycle (assisted bicycle) 21 with a removable battery 1 according to the present invention mounted on the upper side of a main pipe 12 as a main frame of the bicycle 21.

When the battery 1 is mounted on the upper side of the main pipe 12 as shown in FIG. 1, a handle 38 of the battery 1 is positioned in the vicinity of a handle post (steering shaft) or stem 15 of the bicycle 21.

A label 70 is attached on the battery 1 at a position where a remaining capacity of the battery 1 is indicated.

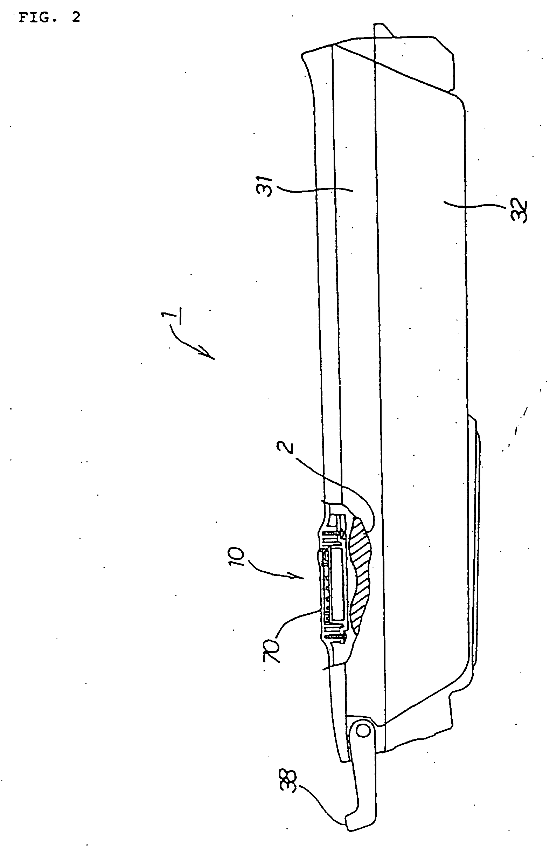

As shown in FIG. 2, the battery 1 includes a battery meter 10 for indicating a remaining capacity of the battery 1. The battery meter 10 is provided in the vicinity of the handle 38.

The battery 1 is composed generally of an upper cover 31, a lower cover 32, and a battery body 2. The battery meter 10 is mounted inside of the upper cover 31.

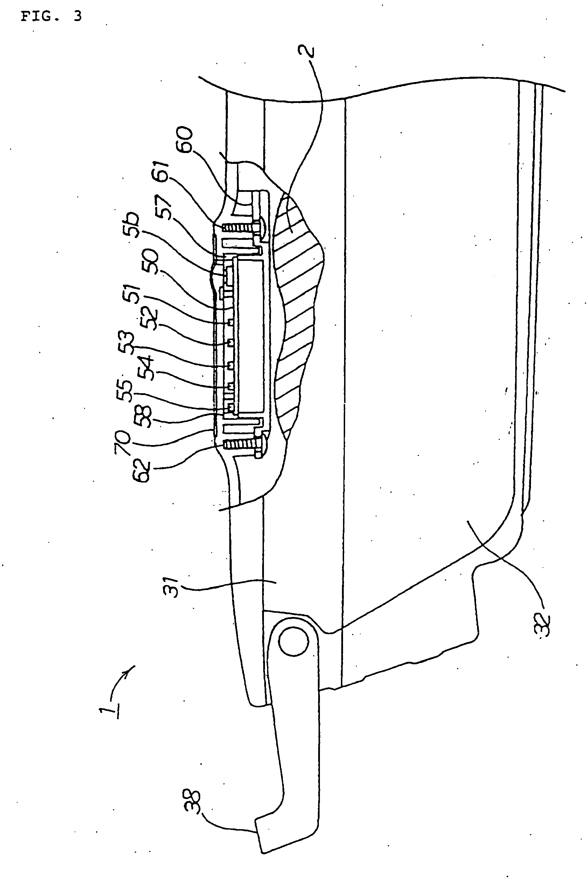

FIG. 3 is a partially cutaway, enlarged side view of an essential part of the battery 1 in the vicinity of the handle 38.

The battery meter 10 includes a substrate 50, a plurality of light emitting diodes (indicator segments) 51 to 55 arranged in an array, a push button 5b, a detecting portion (not shown), and an integrating portion (not shown). The light emitting diodes 51 to 55 and the push button 5b are mounted on the upper surface of the substrate 50. The detecting portion (not shown) and the integrating portion (not shown) are mounted on the lower surface of the substrate 50.

The substrate 50 is fitted with seatings 57 and 58 formed on the inner surface of the upper cover 31. A cover 60 for pressing the substrate 50 is fixed to the upper cover 31 by screws 61 and 62.

The light emitting diodes 51 to 55 mounted on the substrate 50 constitute a bar graph meter, and are turned on according to a remaining capacity of the battery. The upper cover 31 is formed with a window (not shown) just above the array of the light emitting diodes 51 to 55. Accordingly, a remaining capacity of the battery is indicated by the light from the light emitting diodes 51 to 55 through the window to the outside.

In the condition that the battery 1 is mounted on the upper side of the main pipe 12 of the bicycle 21 as shown in FIG. 1, the upper surface of the upper cover 31 is directed to the rear upper side of the bicycle 21.

The substrate 50 is mounted substantially parallel to the upper surface of the upper cover 31. Therefore, a remaining capacity of the battery is indicated to the rear upper side of the bicycle 21.

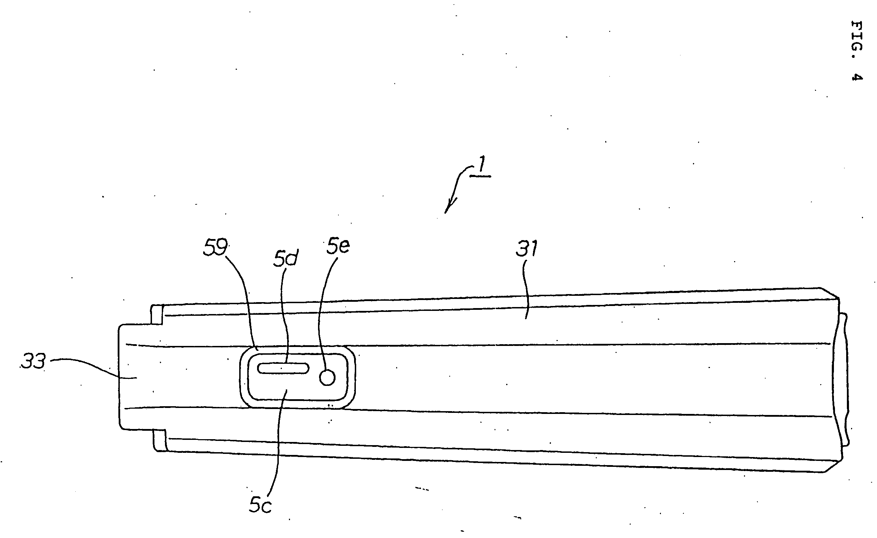

FIG. 4 is a top plan view of the battery 1 according to a preferred embodiment of the present invention.

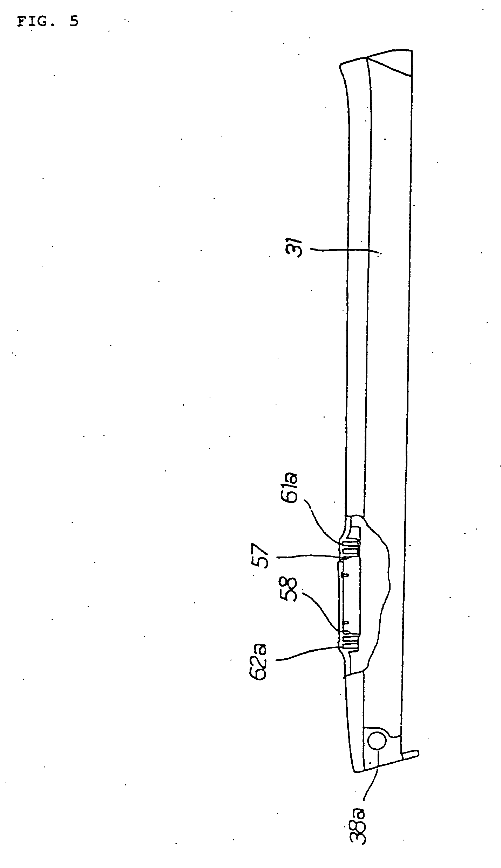

FIG. 5 is a partially cutaway, side view of the upper cover 31 of the battery 1 shown in FIG. 4.

The handle (not shown) of the battery 1 is pivotably mounted on a handle shaft 38a provided at a front end portion 33 of the upper cover 31.

A label attachment area 5c is provided in the vicinity of the front end portion 33 of the upper cover 31.

The label attachment area 5c is higher in level than its surrounding portion. Reference numeral 59 denotes a bank portion formed so as to surround the label attachment area 5c.

A window 5d is formed in the label attachment area 5c. The light emitting diodes (not shown) are arranged in an array just below the window 5d.

A projecting portion 5e is formed in the label attachment area 5c. The push button (not shown) is positioned just below the projecting portion 5e. The projecting portion 5e can be flexed downward, so that when the projecting portion 5e is depressed, the push button (not shown) is pushed by the projecting portion 5e.

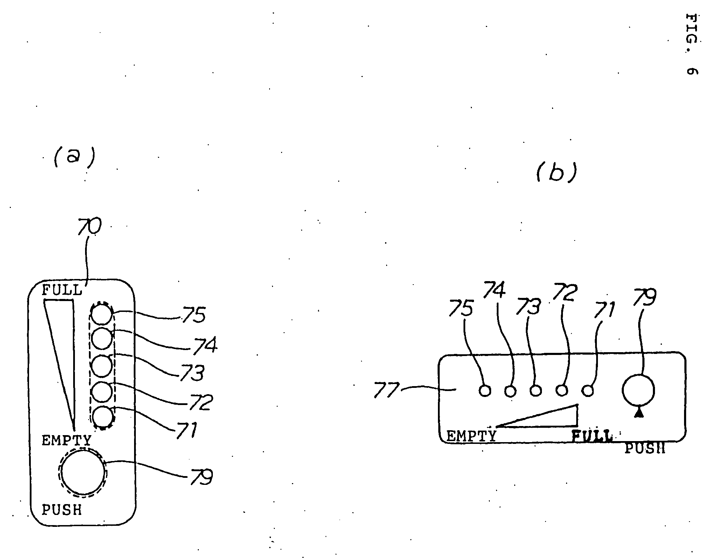

A label 70 as shown in FIG. 6(a) is attached to the label attachment area 5c to cover the window 5d. The label attachment area 5c has a size substantially the same as or slightly larger than the size of the label 70.

In FIG. 5, reference numerals 57 and 58 denote seatings for fittedly holding the substrate on which the light emitting diodes are mounted, and reference numerals 61a and 62a denote tapped holes for threadedly engaging the screws for fixing the cover for pressing the substrate.

FIGS. 6(a) and 6(b) show different examples of the label to be attached to the label attachment area. The label may be formed from a film (e.g. PVC) or a seal.

The label 70 shown in FIG. 6(a) is adapted to be attached to the label attachment area 5c of the upper cover 31 of the battery 1 shown in FIG. 4. The label 70 has a plurality of transparent portions 71 to 75 arranged in an array. When the label 70 is attached to the label attachment area 5c, the transparent portions 71 to 75 are positioned just above the window 5d so as to respectively correspond to the light emitting diodes 51 to 55 (see FIG. 3). The label 70 further has a curved portion 79 at a position where when the label 70 is attached to the label attachment area 5c, the curved portion 79 is positioned just above the projecting portion 5e. The curve of the curved portion 79 is set so as to cover the projecting portion 5e.

In the preferred embodiment shown in FIGS. 2 to 5, the light emitting diodes of the battery meter are arranged in a longitudinal direction of the battery 1 to indicate a remaining capacity of the battery. Alternatively, the light emitting diodes may be arranged in a lateral direction of the battery 1 to indicate a remaining capacity of the battery.

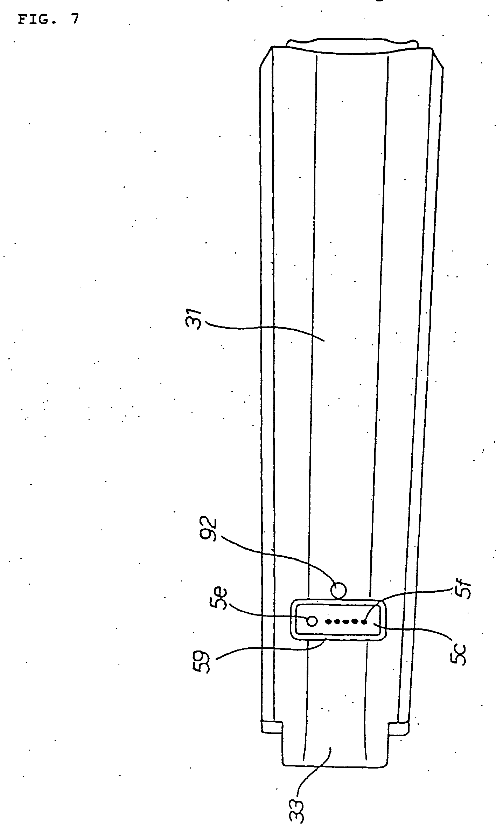

A label 77 shown in FIG. 6(b) is adapted to be attached to the battery 1 shown in FIG. 7. The label 77 has a plurality of transparent portions 71 to 75 arranged in an array just above corresponding windows 5f, and also has a curved portion 79 positioned just above a projecting portion 5e. The curve of the curved portion 79 is set so as to cover the projecting portion 5e.

FIG. 7 is a top plan view of the battery 1 according to another preferred embodiment of the present invention.

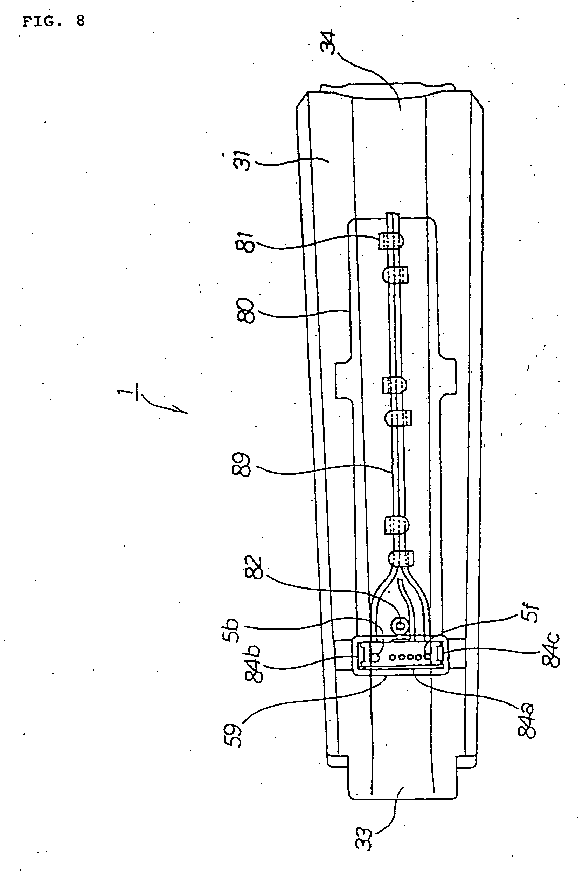

FIG. 8 is a top plan view, partially broken away, of the battery 1 shown in FIG. 7.

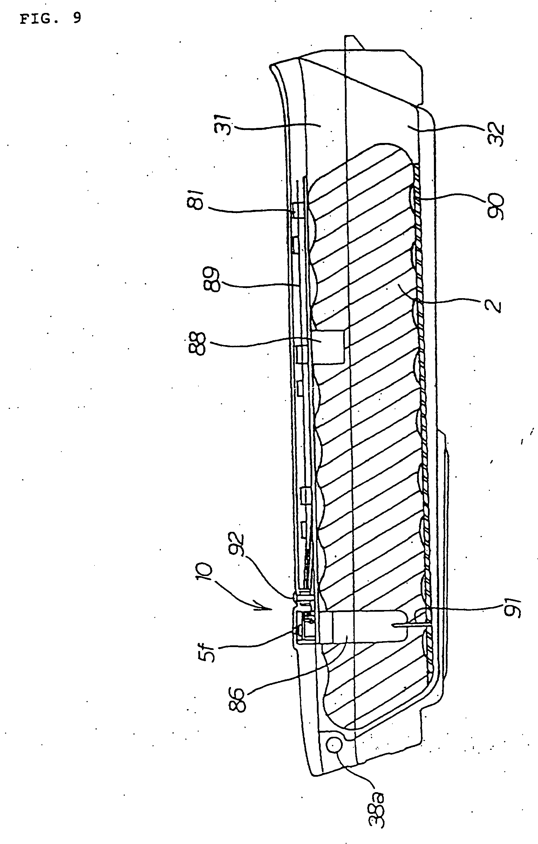

FIG. 9 is a side view, partially broken away, of the battery 1 shown in FIG. 7.

A handle (not shown) of the battery 1 shown in FIGS. 7 to 9 is pivotably mounted on a handle shaft 38a provided at a front end portion 33 of an upper cover 31.

A label attachment area 5c is provided in the vicinity of the front end portion 33 of the upper cover 31.

The label attachment area 5c is higher in level than its surrounding portion. Reference numeral 59 denotes a bank portion surrounding the label attachment area 5c.

A plurality of light emitting diodes (not shown) arranged in an array are positioned just below the corresponding windows 5f.

A push button (not shown) is positioned just below the projecting portion 5e. The projecting portion 5e can be flexed downward, so that when the projecting portion 5e is depressed, the push button (not shown) is pushed by the projecting portion 5e.

When the label 77 shown in FIG. 6(b) is attached to the label attachment area 5c, the windows 5f are covered with the label 77 so as to respectively correspond to the transparent portions 71 to 75 of the label 77. The size of the label attachment area 5c is set substantially the same as or slightly larger than the size of the label 77.

As shown in FIGS. 8 and 9, the battery 1 according to this preferred embodiment is composed generally of an upper cover 31, a lower cover 32, a battery body 2, and a spacer 80 provided between the battery body 2 and the upper cover 31. A battery meter 10 is mounted on the spacer 80.

The spacer 80 is fixed to the upper cover 31 by a screw 92. A head portion of the screw 92 may be covered with the label 77 by increasing the sizes of the label 77 and the label attachment area 5c.

A rubber cushion 90 is laid below the battery body 2.

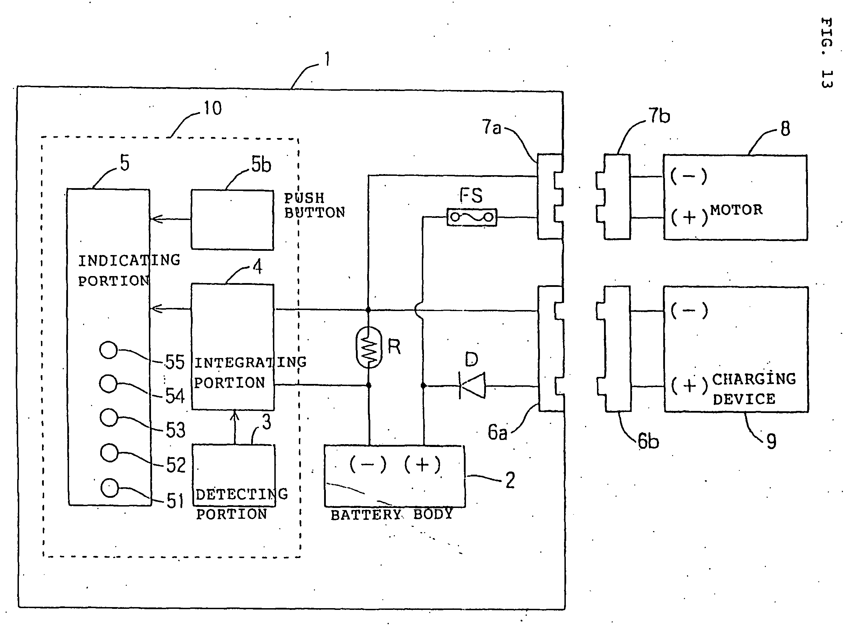

As will be hereinafter described, a fuse FS, a diode D, etc. as shown in FIG. 13 are accommodated in a space defined at a rear end portion 34 of the battery 1, and connectors 6a and 7a are mounted at the rear end of the battery 1.

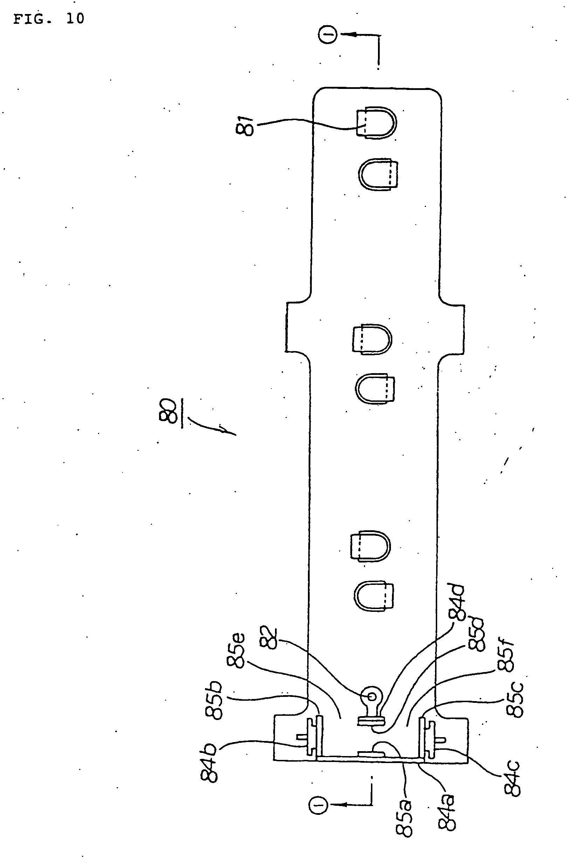

FIG. 10 is a top plan view of the spacer 80.

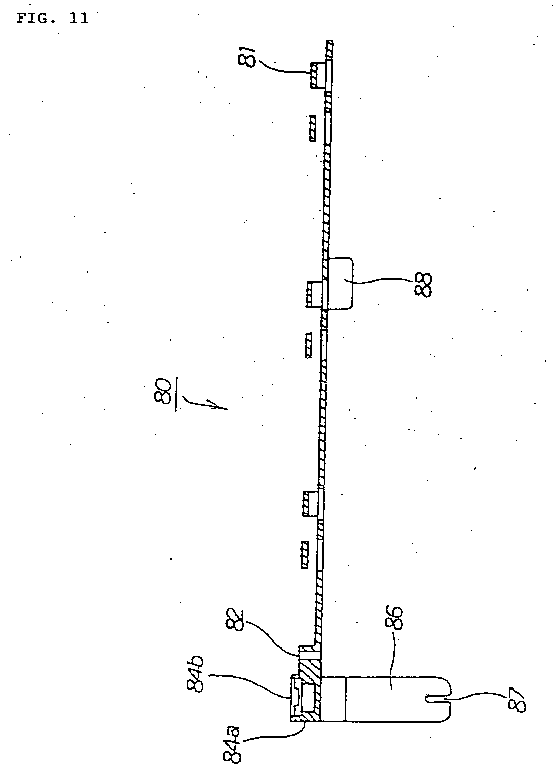

FIG. 11 is a cross section taken along the line I-I in FIG. 10.

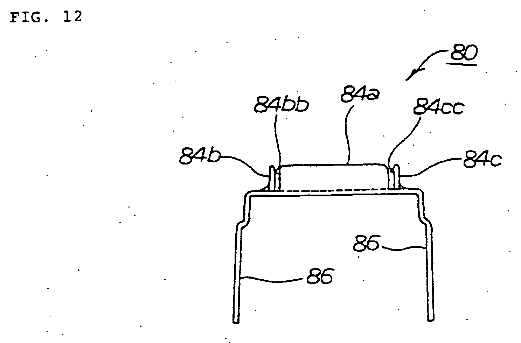

FIG. 12 is a front elevation of the spacer 80.

The spacer 80 is provided with a plurality of walls 84a, 84b, 84c, and 84d for surrounding the battery meter 10 and a plurality of seatings 85a, 85b, 85c, and 85d for supporting the four side edges of the battery meter 10.

The seatings 85a, 85b, and 85c are in abutment against the wall 84a located on the handle post side.

The seatings 85b and 85d are spaced from each other and the walls 84b and 84d are spaced from each other to define a clearance 85e. Similarly, the seatings 85c and 85d are spaced from each other and the walls 84c and 84d are spaced from each other to define a clearance 85f. The clearances 85e and 85f are defined for the purpose of passing a harness 89 (see FIGS. 8 and 9) extending from the battery meter 10 to lead the harness 89 to the rear side opposite to the handle post.

The spacer 80 is provided with six harness guides 81 for guiding the harness 89 extending from the battery meter 10 and passing through the clearances 85e and 85f.

The spacer 80 is further provided with a pair of positioning guides 86 at a front end portion and a pair of positioning guides 88 at an intermediate portion. As shown in FIG. 11, each positioning guide 86 is formed with a slit 87 at a lower end portion. The slit 87 of each positioning guide 86 is engaged with a projection 91 projecting from the inner surface of the lower cover 32 as shown in FIG. 9.

As shown in FIG. 12, the walls 84b and 84c are formed with lugs 84bb and 84cc, respectively, for holding down the battery meter 10 fitted inside the walls 84a, 84b, 84c, and 84d.

FIG. 13 is a schematic block diagram of the battery 1 according to the present invention.

The battery 1 includes a battery meter 10, a battery body 2, a resistor R, a diode D, a fuse FS, and connectors 6a and 7a.

The battery meter 10 includes a detecting portion 3 as a detecting means for detecting a moment of discharge of the battery body 2 for storing electric energy as assisting power of the bicycle, an integrating portion 4 as an integrating means for obtaining a value corresponding to the amount of electric energy in the battery body 2 at the discharge moment as an integral value and integrating electric energy charged and discharged, an indicating portion 5 as an indicating means for indicating the absolute value of a remaining capacity of the battery according to an output from the integrating portion 4, and a push button 5b as an indication button.

The negative terminal of the battery body 2 is connected through the resistor R to one of the two terminals of the connector 7a and one of the two terminals of the connector 6a.

The positive terminal of the battery body 2 is connected through the fuse FS to the other terminal of the connector 7a and through the diode D to the other terminal of the connector 6a.

The detecting portion 3 detects a moment of discharge of the battery body 2 from its terminal voltage, and outputs a detection signal indicative of the discharge moment to the integrating portion 4.

For example, the detecting portion 3 may be configured by a comparator for comparing a terminal voltage and a set voltage, or by the combination with a temperature sensor.

Alternatively, a predetermined discharge moment may be detected by comparing a set value and a digital value obtained by A/D converting a terminal voltage.

The integrating portion 4 receives the detection signal from the detecting portion 3 to obtain a value corresponding to the amount of electric energy of the battery body 2 at the discharge moment as an integral value and integrate an amperage as electric energy charged and discharged. The integral value is an integration of amperage with respect to time, and has a unit of Ah (ampere x hour).

The amperage flowing into or out of the battery body is converted into a voltage by the resistor R, and this voltage is detected by the integrating portion 4.

For example, the integrating portion 4 may be configured by an A/D converter for A/D converting a terminal voltage of the resistor R and a microcomputer having an integrating function.

The resistor R may be included in the battery meter 10.

The indicating portion 5 is configured by a bar graph meter including the light emitting diodes 51 to 55 and the substrate 50 on which the light emitting diodes 51 to 55 are mounted.

The indicating portion 5 turns on any of the light emitting diodes (LED) 51 to 55 according to a signal from the push button 5b and an output signal indicative of the integral value from the integrating portion 4, thereby indicating the absolute value of a remaining capacity of the battery.

For example, the indicating portion 5 may include an LED matrix control circuit for lighting or flashing the light emitting diodes.

To suppress a power consumption, a remaining capacity of the battery is indicated only when the push button 5b is depressed.

The negative terminal of a motor 8 is connected to one of the two terminals of a connector 7b, and the positive terminal of the motor 8 is connected to the other terminal of the connector 7b. The connector 7b has a form mating with the form of the connector 7a.

The assisting power of the bicycle is supplied from the motor 8.

The negative terminal of a charging device 9 is connected to one of the two terminals of a connector 6b, and the positive terminal of the charging device 9 is connected to the other terminal of the connector 6b. The connector 6b has a form mating with the form of the connector 6a.

The amperage to be integrated (added and subtracted) may be corrected according to a battery temperature or the like.

This correction includes discharge rate correction, self- discharge correction, and temperature correction.

It is to be noted that the above preferred embodiments of the present invention are merely illustrative and not limitative.

In summary it is an object to provide a battery for a motor-assisted bicycle which allows an operator to check a remaining capacity of the battery even during operation of the bicycle.

Therefore it is provided a battery 1 for a motor-assisted bicycle 21 adapted to be removably mounted on the upper side of a main pipe 12 of the bicycle 21, wherein a battery meter for externally indicating a remaining capacity of the battery is located in the vicinity of a handle post 15 when the battery 1 is mounted on the upper side of the main pipe 12.

## Claims

1. A motor-assisted bicycle having a removably mounted battery (1) along a frame (12) of said bicycle (21), wherein said battery (1) has a battery meter (10) located in an upper portion of said battery (1) for externally indicating a remaining capacity of said battery,
**characterized in that**
said battery meter (10) is located inside the battery (1) and comprises an integrating means (4) adapted for integrating electric energy charged and discharged for obtaining a value corresponding to the remaining capacity of said battery and adapted for outputting said obtained value for indication by said battery meter (10),
wherein said battery meter (1) includes an indicating means (5) for indicating the absolute value of a remaining capacity of said battery; and wherein said indicating means (5) is configured by a bar graph meter employing a plurality of light emitting diodes (51-55) arranged in an array, and said upper portion of said battery is provided with a window (5d) corresponding to the array of said light emitting diodes (51-55).

2. A motor-assisted bicycle according to claim 1, wherein said battery meter (10) includes a detecting means (3) for detecting a moment of discharge of a battery body (2) for storing electric energy as assisting power of the bicycle.

3. A motor-assisted bicycle according to claim 2, wherein the detecting means is configured by a comparator for comparing a terminal voltage and a set voltage.

4. A motor-assisted bicycle according to claim 2 or 3, wherein the detecting means (3) detects the moment of discharge of the battery from its terminal voltage and outputs a detection signal indicative of the discharge moment to the integrating means (4).

5. A motor-assisted bicycle according to any of claims 1 to 4, wherein a predetermined discharge moment is detected by comparing a set value and a digital value obtained by A/D converting a terminal voltage.

6. A motor-assisted bicycle according to claims 1 to 5, wherein a resistor (R) is provided to convert the amperage flowing into or out of the battery body into a voltage which is detected by the integrating means (4).

7. A motor-assisted bicycle according to claim 6, wherein the resistor (R) is included in the battery meter (10).

8. A motor-assisted bicycle according to any of claims 1 to 7, wherein the integrating means (4) is configured by an A/D converter for A/D converting a terminal voltage of the resistor (R) and a microcomputer having an integrating function.

9. A motor-assisted bicycle according to claim 1, wherein a push button (5b) is provided and wherein the indicating means (5) turns on any of light emitting diodes (51-55) according to a signal from the push button (5b) and an output from the integrating portion (4), thereby indicating the absolute value of a remaining capacity of the battery.

10. A motor-assisted bicycle according to claim 1 or 9, wherein the indicating means (5) includes an LED matrix control circuit for lighting or flashing light emitting diodes.

11. A motor-assisted bicycle (21) according to any of claims 1 to 10, wherein said frame is provided between a front wheel and a rear wheel and supports a steering handle bar and a pair of pedals and has a main pipe (12) extending obliquely downwardly between the steering handle bar and the pair of pedals.

12. A motor-assisted bicycle (21) according to any of claims 1 to 11, said motor-assisted bicycle (21) including
a frame provided between a front wheel and a rear wheel, said frame supporting a steering handle bar and a pair of pedals and having a main pipe (12) extending obliquely downwardly between the steering handle bar and the pair of pedals; and
said battery (1) adapted to be removably mounted on an upper side of the main pipe (12) of said bicycle, said battery (1) comprising an upper case (31), a lower case (32), a battery body (2) and said battery meter (10) for indicating a remaining capacity of said battery,
wherein said battery meter (10) is mounted inside said upper case (31), wherein said battery meter (10) comprises said indicating portion (5), a detecting portion (3) and an integrating portion (4) mounted on a substrate, and
wherein said upper case (31) is provided with said window (5d) just above the indicating portion (5).

## Patentansprüche

1. Motorunterstütztes Fahrrad, welches entlang eines Rahmens (12) des Fahrrads (21) eine lösbar angebrachte Batterie (1) hat, wobei die Batterie (1) ein Batteriemessgerät (10) hat, welches in einem oberen Abschnitt von der Batterie (1) angeordnet ist, um eine Restkapazität der Batterie extern anzuzeigen,
**dadurch gekennzeichnet, dass**
das Batteriemessgerät (10) im Inneren der Batterie (1) angeordnet ist und ein Integrationsmittel (4) umfasst, welches dazu ausgebildet ist, eine geladene und entladene elektrische Energie zu integrieren, um einen Wert zu erhalten, welcher der Restkapazität der Batterie entspricht, und dazu ausgebildet ist, den erhaltenen Wert zur Anzeige durch das Batteriemessgerät (10) auszugeben,
wobei das Batteriemessgerät (1) ein Anzeigemittel (5) umfasst, um den Absolutwert einer Restkapazität der Batterie anzuzeigen; und wobei das Anzeigemittel (5) mit einem Balkendiagrammmessgerät aufgebaut ist, welches eine Mehrzahl von lichtemittierenden Dioden (51-55) verwendet, welche in einer Anordnung angeordnet sind, und der obere Abschnitt von der Batterie mit einem Fenster (5d) versehen ist, welches der Anordnung von den lichtemittierenden Dioden (51-55) entspricht.

2. Motorunterstütztes Fahrrad nach Anspruch 1, wobei das Batteriemessgerät (10) ein Erfassungsmittel (3) zum Erfassen eines Entlademoments von einem Batteriekörper (2) zum Speichern von elektrischer Energie als einer Unterstützungskraft für das Fahrrad umfasst.

3. Motorunterstütztes Fahrrad nach Anspruch 2, wobei das Erfassungsmittel mit einem Komparator zum Vergleichen einer Klemmenspannung und einer eingestellten. Spannung aufgebaut ist.

4. Motorunterstütztes Fahrrad nach Anspruch 2 oder 3, wobei das Erfassungsmittel (3) das Entlademoment von der Batterie aus ihrer Klemmenspannung erfasst und ein das Entlademoment anzeigendes Erfassungssignal an das Integrationsmittel (4) ausgibt.

5. Motorunterstütztes Fahrrad nach einem der Ansprüche 1 bis 4, wobei ein vorbestimmtes Entlademoment erfasst wird, indem ein eingestellter Wert und ein digitaler Wert verglichen werden, welcher durch eine A/D-Wandlung einer Klemmenspannung erhalten wird.

6. Motorunterstütztes Fahrrad nach den Ansprüchen 1 bis 5, wobei ein Widerstand (R) vorgesehen ist, um die in und aus dem Batteriekörper fließende Stromstärke in eine Spannung umzuwandeln, welche von dem Integrationsmittel (4) erfasst wird.

7. Motorunterstütztes Fahrrad nach Anspruch 6, wobei der Widerstand (R) in dem Batteriemessgerät (10) enthalten ist.

8. Motorunterstütztes Fahrrad nach einem der Ansprüche 1 bis 7,
wobei das Integrationsmittel (4) mit einem A/D-Wandler aufgebaut ist, um eine Klemmenspannung von dem Widerstand (R) A/D zu wandeln, und mit einem Mikrocomputer aufgebaut ist, welcher eine Integrationsfunktion hat.

9. Motorunterstütztes Fahrrad nach Anspruch 1, wobei ein Druckknopf (5b) vorgesehen ist und wobei das Anzeigemittel (5) irgendeine von den lichtemittierenden Dioden (51-55) gemäß einem Signal von dem Druckknopf (5b) und einer Ausgabe von dem Integrationsmittel (4) einschaltet, um auf diese Weise den Absolutwert einer Restkapazität der Batterie anzuzeigen.

10. Motorunterstütztes Fahrrad nach Anspruch 1 oder 9, wobei das Anzeigemittel (5) eine LED-Matrix-Steuer-/Regelschaltung umfasst, um lichtemittierende Dioden aufleuchten oder blinken zu lassen.

11. Motorunterstütztes Fahrrad (21) nach einem der Ansprüche 1 bis 10, wobei der Rahmen zwischen einem Vorderrad und einem Hinterrad vorgesehen ist und einen Lenker und ein Paar von Pedalen abstützt und ein Hauptrohr (12) hat, welches sich zwischen dem Lenker und dem Paar von Pedalen schräg nach unten erstreckt.

12. Motorunterstütztes Fahrrad (21) nach einem der Ansprüche 1 bis 11, wobei das motorunterstützte Fahrrad (21) umfasst einen Rahmen, welcher zwischen einem Vorderrad und einem Hinterrad vorgesehen ist, wobei der Rahmen einen Lenker und ein Paar von Pedalen abstützt und ein Hauptrohr (12) hat, welches sich zwischen dem Lenker und dem Paar von Pedalen schräg nach unten erstreckt; und
die Batterie (1) dazu ausgebildet ist, entfernbar an einer Oberseite von dem Hauptrohr (12) des Fahrrads angebracht zu sein, wobei die Batterie (1) ein oberes Gehäuse (31), ein unteres Gehäuse (32), einen Batteriekörper (2) und das Batteriemessgerät (10) umfasst, um eine Restkapazität der Batterie anzuzeigen,
wobei das Batteriemessgerät (10) im Inneren des oberen Gehäuses (31) angebracht ist, wobei das Batteriemessgerät (10) den Anzeigeabschnitt (5), einen Erfassungsabschnitt (3) und einen Integrationsabschnitt (4) umfasst, welche auf einem Substrat angebracht sind, und
wobei das obere Gehäuse (31) genau oberhalb des Anzeigeabschnitts (5) mit dem Fenster (5d) versehen ist.

## Revendications

1. Bicyclette à moteur auxiliaire comportant une batterie (1) montée de manière amovible le long d'un cadre (12) de ladite bicyclette (21), dans laquelle ladite batterie (1) comporte un indicateur de charge de batterie (10) situé dans une partie supérieure de ladite batterie (1) pour indiquer à l'extérieur une capacité disponible de ladite batterie,
**caractérisée en ce que**
ledit indicateur de charge de batterie (10) est situé à l'intérieur de la batterie (1) et comprend un moyen d'intégration (4) adapté pour intégrer l'énergie électrique chargée et déchargée pour obtenir une valeur correspondant à la capacité disponible de ladite batterie et adapté pour sortir ladite valeur obtenue pour indication par ledit indicateur de charge de batterie (10),
dans laquelle ledit indicateur de charge de batterie (1) inclut un moyen indicateur (5) permettant d'indiquer la valeur absolue d'une capacité disponible de ladite batterie ; et
dans laquelle ledit moyen indicateur (5) est configuré avec indicateur graphique linéaire utilisant une pluralité de diodes électroluminescentes (51 à 55) aménagées en réseau, et ladite partie supérieure de ladite batterie est pourvue d'une fenêtre (5d) correspondant au réseau desdites diodes électroluminescentes (51 à 55).

2. Bicyclette à moteur auxiliaire selon la revendication 1, dans laquelle ledit indicateur de charge de batterie (10) inclut un moyen de détection (3) permettant de détecter un moment de décharge d'un corps de batterie (2) pour stocker de l'énergie électrique qui sert de puissance d'assistance à la bicyclette.

3. Bicyclette à moteur auxiliaire selon la revendication 2, dans laquelle le moyen de détection est configuré avec un comparateur permettant de comparer une tension de borne et une tension réglée.

4. Bicyclette à moteur auxiliaire selon la revendication 2 ou 3, dans laquelle le moyen de détection (3) détecte le moment de décharge de la batterie à partir de sa tension de borne et sort un signal de détection indicateur du moment de charge vers le moyen d'intégration (4).

5. Bicyclette à moteur auxiliaire selon l'une quelconque des revendications 1 à 4, dans laquelle un moment de décharge prédéterminé est détecté en comparant une valeur réglée et une valeur numérique obtenue par la conversion d'un courant alternatif en courant continu d'une tension de borne.

6. Bicyclette à moteur auxiliaire selon les revendications 1 à 5, dans laquelle une résistance (R) est fournie pour convertir l'intensité de courant qui passe à l'intérieur ou hors du corps de batterie en une tension qui est détectée par le moyen d'intégration (4).

7. Bicyclette à moteur auxiliaire selon la revendication 6, dans laquelle la résistance (R) est incluse dans l'indicateur de charge de batterie (10).

8. Bicyclette à moteur auxiliaire selon l'une quelconque des revendications 1 à 7, dans laquelle le moyen d'intégration (4) est configuré par un convertisseur courant alternatif/courant continu pour convertir un courant alternatif en courant continu d'une tension de borne de la résistance (R) et un micro-ordinateur ayant une fonction d'intégration.

9. Bicyclette à moteur auxiliaire selon la revendication 1, dans laquelle un bouton poussoir (5b) est prévu et dans laquelle le moyen d'indication (5) allume l'une quelconque des diodes électroluminescentes (51 à 55) selon un signal provenant du bouton poussoir (5b) et une sortie de la partie d'intégration (4), indiquant de ce fait la valeur absolue d'une capacité disponible de la batterie.

10. Bicyclette à moteur auxiliaire selon la revendication 1 ou 9, dans laquelle le moyen d'indication (5) inclut un circuit de commande matriciel à DEL permettant d'allumer ou de faire clignoter des diodes électroluminescentes.

11. Bicyclette à moteur auxiliaire (21) selon l'une quelconque des revendications 1 à 10, dans laquelle ledit cadre est disposé entre une roue avant et une roue arrière et supporte un guidon de direction et une paire de pédales et comporte un tube principal (12) s'étendant de manière oblique vers le bas entre le guidon de direction et la paire de pédales.

12. Bicyclette à moteur auxiliaire (21) selon l'une quelconque des revendications 1 à 11, dans laquelle ladite bicyclette à moteur auxiliaire (21) inclut
un cadre disposé entre une roue avant et une roue arrière, ledit cadre supportant un guidon de direction et une paire de pédales et comportant un tube principal (12) s'étendant de manière oblique vers le bas entre le guidon de direction et la paire de pédales ; et
ladite batterie (1) adaptée pour être montée de manière amovible sur un côté supérieur du tube principal (12) de ladite bicyclette, ladite batterie (1) comprenant un carter supérieur (31), un carter inférieur (32), un corps de batterie (2) et ledit indicateur de charge de batterie (10) pour indiquer la capacité disponible de ladite batterie,
dans laquelle ledit indicateur de charge de batterie (10) est monté à l'intérieur dudit carter supérieur (31), où ledit indicateur de charge de batterie (10) comprend ladite partie indicatrice (5), une partie de détection (3) et une partie d'intégration (4) montée sur un substrat, et
dans laquelle ledit carter supérieur (31) est pourvu de ladite fenêtre (5d) juste au-dessus de ladite partie indicatrice (5).
